# FASCICULE DE BREVET EUROPEEN

(11) **EP 1 112 231 B1**
(45) Date de publication et mention de la délivrance du brevet: **16.02.2005**
(21) Numéro de dépôt: 99936722.0
(22) Date de dépôt: 11.08.1999
(51) Int. Cl.: C02F 3/12, C02F 3/06, C02F 11/16, C02F 3/32

(54) **PROCEDE ET INSTALLATIONS DE TRAITEMENT D'EFFLUENTS DE PETITES COLLECTIVITES**
VERFAHREN UND ANLAGEN ZUM BEHANDELN VON ABWÄSSERN AUS KLEINEN GEMEINSCHAFTEN
METHOD AND INSTALLATIONS FOR TREATING EFFLUENTS IN SMALL COMMUNITIES

(30) Priorité: 20.08.1998 FR 9810582
(43) Date de publication de la demande: 04.07.2001
(73) Titulaire: Suez Lyonnaise des Eaux, 75383 Paris Cédex 08 (FR)
(72) Inventeur: VIRLOGET, François, F-78610 Les Bréviaires (FR)
(74) Mandataire: Peaucelle, Chantal
(86) Numéro de dépôt international: PCT/FR1999/001970
(87) Numéro de publication internationale: WO 2000/010927

(56) Documents cités:
- DE-U- 29 707 646
- US-A- 5 078 882
- MANDI L ET AL: "Wastewater treatment by reed beds an experimental approach" WATER RESEARCH, vol. 30, no. 9, 1 septembre 1996 (1996-09-01), page 2009-2016 XP004035333

## Description

La présente invention concerne d'une façon générale, le traitement des effluents de ce qu'il est convenu d'appeler des petites collectivités, c'est-à-dire des collectivités présentant de 500 à 2 000 eH (équivalent habitant).

La FRANCE comporte environ 36 000 communes, dont 31 300 communes de plus de 200 habitants et de moins de 2 000 habitants, lesquels représentent une population de l'ordre de 15 000 000 d'habitants constituant environ 25% de la population française totale.

Le parc national français des stations d'épuration comporte environ 12 000 stations d'épuration parmi lesquelles 60% ont une taille inférieure à 2 000 eH.

Le plus souvent, ces stations d'épuration pour petites collectivités mettent en oeuvre un traitement biologique par boues activées bien que cette technique ne soit absolument pas adaptée à des stations d'épuration d'une telle dimension, ceci notamment en raison d'un coût d'investissement élevé et surtout de coûts d'exploitation excessifs. Par ailleurs, l'efficacité de telles stations est souvent médiocre. L'homme de l'art sait que le traitement biologique des effluents par boues activées doit être réservé aux installations les plus importantes dans le cadre d'un rejet dans un milieu particulièrement sensible.

US-A- 5 078 882 concerne un procédé pour la transformation biologique de matières résiduaires, notamment d'eaux résiduaires domestiques et industrielles, en matières souhaitables d'un point de vue écologique. Le procédé consiste en un traitement dans un réacteur biologique. La biomasse en excès produite par le réacteur biologique est traitée ensuite dans un écoréacteur sous forme d'un système de marécage contenant une grande variété de microorganismes, plantes et animaux. Un géoréacteur est situé au-dessous de l'écoréacteur. La présence d'un tel géoréacteur complique le procédé et en augmente le coût. Plusieurs réalisations possibles de réacteur biologique sont présentées comme acceptable, notamment des systèmes de traitement par boues activées entraînant des coûts excessifs pour petites collectivités.

DE 297 07 646 concerne une installation pour épuration biologique d'eaux résiduaires chargées de matières organiques. L'installation comprend au moins un étage de décantation et de formation de compost pour les composants solides comportant plusieurs chambres, un réservoir intermédiaire et au moins deux étages de clarification sous forme de lits de filtration de plantes. Diverses plantes sont mentionnées comme possibles dont les roseaux. L'efficacité d'une telle installation demande à être améliorée tant au point de vue coût de réalisation et d'exploitation qu'au point de vue réduction de la surface occupée.

Le problème devant être résolu réside dans le développement d'une technique adaptée à de telles petites installations pour un coût d'exploitation financièrement acceptable. En particulier, l'objectif est d'atteindre, pour des installations de traitement d'effluents d'une capacité comprise entre 500 et 2 000 eH, un coût d'exploitation réduit de 50 à 70% par rapport à celui des installations mettant en oeuvre un traitement biologique par boues activées.

Afin de résoudre le problème mentionné ci-dessus, l'invention se propose d'apporter une filière de traitement originale, peu coûteuse en investissement et en exploitation et répondant bien entendu, aux exigences de rejet de l'arrêté du 21 juin 1996 (JO du 9 août 1996) relatif aux ouvrages de traitement des eaux usées des petites collectivités, c'est-à-dire de 200 à 2 000 eH (> 12 kg DBO5 et < 120 kg DBO5/j).

Selon l'art. 13 de cet arrêté, les performances suivantes sont prévues pour un traitement biologique :
- soit un rendement minimal de 60% sur la DBO5 ou la DCO,
- soit une concentration maximale de l'effluent traité de 35 mg DBO5/l.

Ces exigences sont bien entendu remplies par le procédé et l'installation objets de la présente invention.

En conséquence, cette invention concerne en premier lieu un procédé de traitement d'effluents de petites collectivités, c'est-à-dire de 500 à 2000 eH (équivalent habitant) environ, mettant en oeuvre des filtres plantés de roseaux, caractérisé en ce qu'il consiste :
- à effectuer un traitement biologique de l'effluent à l'aide d'un lit bactérien et,
- à réaliser une élimination des matières en suspension dans l'effluent ainsi traité et simultanément un traitement des boues, par filtration-compostage sur des filtres plantés de Phragmites australis.

L'invention concerne également une installation en vue de la mise en oeuvre du procédé défini ci-dessus, cette installation étant caractérisée en ce qu'elle comporte
- un lit bactérien comportant au moins un étage recevant l'effluent à traiter et,
- au moins une cellule de filtration-compostage, alimentée à partir du lit bactérien, chacune desdites. cellules comportant des couches successives de matériaux de remplissage et de sable, et leur surface supérieure étant plantée de Phragmites australis.

Ainsi qu'on le comprend, les exigences de rejet mentionnées dans l'arrêté du 21 juin 1996, sont respectées par l'invention en mettant en oeuvre un lit bactérien, c'est-à-dire une filière de traitement du type culture fixée à faible temps de contact, l'alimentation en effluents s'effectuant directement sans passage dans un décanteur primaire. La technique du lit bactérien, dans sa conception moderne (absence de décantation primaire, filière de traitement de type tamisage, poste de pompage « alimentation-recirculation », lit à garnissage plastique), permet un traitement économique des effluents du fait d'une faible consommation énergétique (près de deux fois moins importante qu'en boues activées, à performance égale). Le coût d'investissement reste intéressant pour un traitement limité à l'elimination de la pollution carbonée.

En fonction des contraintes du milieu naturel, il est possible d'envisager un traitement de nitrification de l'azote ammoniacal, en surdimensionnant le lit bactérien, ou en prévoyant un deuxième étage. Ainsi, le dimensionnement du premier étage doit être défini, selon l'invention, en fonction des obligations de rejet et des traitements d'élimination de la pollution de l'effluent à effectuer.

Les effluents ainsi traités sont ensuite débarrassés des matières en suspension par passage au travers des cellules de fitration plantées de roseaux où s'effectue également le traitement des boues par rhizo-compostage. On peut également compter sur un traitement complémentaire des effluents dans le massif filtrant des cellules de filtration.

Selon la présente invention, le pré-traitement des effluents se limite à un dégrillage fin (maille 3 mm) ou un tamisage (maille 6 mm) permettant d'éliminer les déchets divers. Il n'est pas nécessaire de mettre en oeuvre un système de dessablage-dégraissage étant donné que les particules (matières organiques y compris les graisses, sable) dont la granulométrie est inférieure à la maille de dégrillage ou de tamisage, n'ont pas d'incidence sur la filière de traitement (lit bactérien + filtre-rhizocompostage).

A titre d'exemple de réalisation non limitatif, on peut indiquer qu'un dispositif réalisé selon la présente invention comporte un premier poste de relèvement-recirculation (équipé de deux pompes dont une en secours) alimentant en permanence le lit bactérien. Ce dernier est du type à garnissage plastique PVC (courant croisé, surface spécifique 165 m²/m³) présentant une hauteur d'environ 5 mètres, la charge hydraulique moyenne étant de l'ordre de 2 m/h. On prévoit, dans ce poste, une cloison afin de pomper en priorité les effluents bruts à traiter, avec un apport complémentaire d'effluents traités afin d'assurer les conditions hydrodynamiques du lit bactérien.

Les effluents traités sur le lit bactérien accèdent à un deuxième poste de pompage, par trop-plein du poste de relèvement-recirculation, ce deuxième poste de pompage, équipé de deux pompes dont une en secours, présentant un volume de marnage suffisant pour permettre une alimentation par bâchée des cellules de filtration-compostage (bâchées de 5 à 15 cm, sur 10 à 20 minutes).

Selon cet exemple de réalisation de la présente invention, l'installation de traitement comporte des cellules de filtration-compostage dont le nombre est au minimum de trois. La surface de ces cellules est de 0,4 à 1 m² par eH et la surface maximale unitaire est de 100 à 150 m². A chaque bâchée, correspond l'alimentation du lit d'une celllule. Selon la présente invention, on prévoit un automatisme, au niveau du deuxième poste de pompage, afin d'assurer une alimentation de toutes les cellules de filtration-compostage, par permutation circulaire, avec en permanence au moins une cellule au repos durant une semaine.

A titre d'exemple, les cellules de filtration-compostage peuvent être réalisées à partir de pieux et de panneaux de clôture en béton, jointoyés, présentant une hauteur d'environ 2 mètres (ce qui ménage une hauteur libre de 1,50 m.) et une largeur maximale de 5 m. afin de permettre un accès pour l'enlèvement des boues. Le soubassement des cellules est constitué d'une bâche en matière plastique sur laquelle sont disposés des drains, afin d'assurer la récupération des effluents traités, dans une couche de cailloux (h = 20 cm environ et granulométrie de l'ordre de 30/80 mm). Cette couche de cailloux est recouverte successivement d'une couche de graviers (h = 10 cm environ) et d'une couche de sable (h = 40 cm, sable lavé exempt de fines).

Un traitement biologique du type culture fixée s'opère sur la couche de sable et avec l'effet mécanique de la filtration, il est possible d'obtenir de bonnes performances épuratoires.

Les surfaces des cellules de filtration-compostage sont plantées de roseaux (phragmites australis) dont le développement racinaire intense favorise la circulation de l'air et assure un compostage des boues. En fonctionnement normal, la siccité des boues est d'environ 12% et le niveau de voile des boues dans les cellules augmente de 20 à 30 cm par an. Après environ cinq années de fonctionnement, il est nécessaire d'assurer l'extraction des boues accumulées (compost). Après une période de repos de l'ordre de une à deux semaines, le compost est extrait et il est mis en stockage provisoirement, pour séchage, sur une aire avoisinante. Après plusieurs semaines de séchage, il est possible d'obtenir un produit parfaitement stabilisé présentant une siccité supérieure à 30%.

Le tableau 1 ci-après donne à titre d'exemple, le dimensionnement des divers éléments de stations d'épuration selon la présente invention, pour différentes tailles d'installation.

**Tableau 1**

| D**ONNEES DE BASE** | | | | | | |
|---|---|---|---|---|---|---|
| Capacité Nominale | eH | 200 | 500 | 1000 | 1500 | 2000 |
| Débit journalier | m³/j | 30 | 75 | 150 | 225 | 300 |
| DBO5 nd Eaux brutes | kg/j | 12 | 30 | 60 | 90 | 120 |

| **OBJECTIF DE REJET** | | | | | | |
|---|---|---|---|---|---|---|
| DBOS ad2 rejet visée (sortie lit bactérien) | mg/l | 35 | 35 | 35 | 35 | 35 |

| **DEGRILLAGE FIN (type Aquagard 3mm)** | | | | | | |
|---|---|---|---|---|---|---|
| Production de déchets | kg/an | 438 | 1095 | 2190 | 3285 | 4380 |

| **POSTE DE POMPAGE RECIRCULATION** | | | | | | |
|---|---|---|---|---|---|---|
| Débit unitaire | M³/h | 8,0 | 20 | 40 | 60 | 80 |
| Nombre de pompe | u | 2,0 | 2,0 | 2,0 | 2,0 | 2,0 |

| **LIT BACTERIEN** | | | | | | |
|---|---|---|---|---|---|---|
| Rendement lit | %(sur EB ad2) | 87 | 87 | 87 | 87 | 87 |
| Surface développée à prévoir | m² | 2600 | 6600 | 13000 | 20000 | 26000 |
| Diamètre | m | 3,2 | 4,1 | 5,1 | 6,2 | 6,4 |
| Débit minimum de la pompe de recirculation | m³/h | 8,0 | 20 | 40 | 60 | 80 |
| Production de boues non stabilisées | kg MES/j | 13,4 | 33,5 | 66,9 | 100,4 | 133,9 |

| **POSTE DE ELEVEMENT SECONDAIRE** | | | | | | |
|---|---|---|---|---|---|---|
| Débit de pompage vers les cellules | m³/h | 15 | 38 | 56 | 56 | 56 |

| **FILTRATION, RHIZOCOMPOSTAGE** | | | | | | |
|---|---|---|---|---|---|---|
| Nombre de cellule de rhizocompostage | u | 3 | 3 | 4 | 6 | 8 |
| Surface unitaire des cellules | m² | 30 | 74 | 112 | 112 | 112 |
| Production de compost | m³/an | 16 | 40 | 79 | 119 | 159 |

En ce qui concerne la consommation d'espace, le tableau 2 ci-après indique les surfaces totales devant être mises en oeuvre d'une part dans les techniques antérieures et d'autre part dans une installation selon la présente invention mettant en oeuvre un lit bactérien combiné à des cellules de filtration-rhizo-compostage. Dans ce tableau, « GDE » désigne une grille d'égouttage par exemple telle que définie dans Fr-A-2 754 191.

**Tableau 2**

| | | | | | | |
|---|---|---|---|---|---|---|
| **Capacité** | **eH** | **200** | **500** | **1000** | **1500** | **2000** |
| Filtres enterrés | M2 | 500 | 1175 | 2300 | 3425 | 4550 |
| Infiltration Percolation | M2 | 750 | 1725 | 3350 | 4975 | 6600 |
| Lagunage naturel | M2 | 4500 | 11250 | 22500 | 33750 | 45000 |
| Lits bactériens + Clarif + GDE + Silo | M2 | 300 | 750 | 1500 | 2250 | 3000 |
| Boues activées + Clarif + GDE + Silo | M2 | 200 | 500 | 1000 | 1500 | 2000 |
| Filtres plantés de roseaux deux étages | M2 | 600 | 1500 | 3000 | 4500 | 6000 |
| **Lit bactérien + Filtre rhizocompostage** | **M2** | **140** | **350** | **700** | **1050** | **1400** |

L'examen de ce tableau 2 fait clairement ressortir que la technique proposée par l'invention est très peu gourmande en espace, ce qui lui confère un avantage important, par rapport aux autres techniques, notamment par rapport au lagunage et à toutes les techniques dans lesquelles intervient la filtration pour le traitement des effluents.

Le tableau 3 permet de comparer les coûts d'investissement des installations selon l'invention, à ceux des installations selon les autres filières de traitement. Les valeurs indiquées dans le tableau 3 correspondent à des coûts relatifs exprimés par rapport au cas de figure le plus onéreux, arbitrairement chiffré à 1 000.

**Tableau 3**

| **Capacité** | **200 eH** | **500 eH** | **1000 eH** | **1500 eH** | **2000 eH** |
|---|---|---|---|---|---|
| Filtres enterrés | 1000 | 847 | | | |
| Lagunage naturel | 840 | 445 | 290 | 245 | 230 |
| Infiltration Percolation | 735 | 460 | 260 | 200 | 185 |
| Lits bactériens + Clarif + GDE + Silo | 795 | 380 | 290 | 245 | 230 |
| Boues activées + Clarif + GDE + Silo | 655 | 410 | 320 | 275 | 260 |
| Filtres plantés de roseaux (2 étages) | 550 | 380 | 275 | 245 | 230 |
| **Lit bactérien + Filtre Rhizocompostage** | **520** | **320** | **260** | **230** | **215** |

Les ratios de prix mentionnés ci-dessus sont donnés à titre indicatif, avec un objectif du respect des normes précédemment mentionnées, hormis la technique du lagunage (norme particulière sur échantillons du rejet préalablement filtré). En ce qui concerne la technique par boues activées, il est fait référence à un traitement du type aération prolongée. Pour les installations de capacité inférieure à 500 eH, il n'est pas pris en compte un épaississement dynamique (par exemple « GDE » ou autres techniques similaires).

Le tableau 3 fait clairement ressortir que la technique apportée par la présente invention est particulièrement intéressante pour des stations présentant des tailles inférieures ou égales à 1 000 eH. On notera par ailleurs que le prix du terrain n'a pas été pris en considération dans ces évaluations de coûts, ce qui peut s'avérer être un paramètre déterminant dans le choix de la solution aui sera à adopter. A cet égard, la technique selon la présente invention présente des avantages déterminants dans le cas d'un prix de terrain élevé.

Le tableau 4 ci-après permet de comparer les coûts d'exploitation de stations d'épuration de différentes capacités selon la présente invention à ceux de stations d'épuration de même capacité selon les techniques antérieures. Le tableau 4 donne les coûts approximatifs d'exploitation par an et par équivalent Habitant (exprimés en ratio par rapport au coût d'exploitation le plus élevé).

**Tableau 4**

| | | | | | |
|---|---|---|---|---|---|
| **Capacité** | **200 eH** | **500 eH** | **1000 eH** | **1500 eH** | **2000 eH** |
| Boues activées | 1,00 | 0,70 | 0,44 | 0,39 | 0,34 |
| Lit bactérien + Rhizofiltre | 0,66 | 0,43 | 0,26 | 0,22 | 0,19 |
| Lagunage naturel | 0,36 | 0,20 | 0,17 | 0,15 | 0,14 |
| Infiltration Percolation | 0,32 | 0,23 | 0,21 | 0,20 | 0,19 |
| Filtres plantés de roseaux (2 étages) | 0,23 | 0,16 | 0,15 | 0,14 | 0,13 |
| **Lit bactérien + Filtre Rhizocompostage** | **0,44** | **0,21** | **0,17** | **0,13** | **0,11** |

La lecture de la description qui précède fait clairement ressortir que l'invention apporte un procédé et une installation de traitement des effluents dont le dimensionnement optimisé permet de réduire les coûts d'investissement et de fonctionnement, en bénéficiant des avantages de chacun des postes de traitement (lit bactérien et filtres de rhizo-compostage) ceci étant particulièrement vrai en ce qui concerne le second poste dans lequel sont assurés simultanément la filtration des effluents provenant du lit bactérien et le compostage de la phase boues.

Le procédé et le dispositif objet de cette invention permettent d'obtenir une boue stabilisée, non fermentescible et commode d'emploi en particulier pour la réalisation de remblais, pour des applications agricoles, etc.

Il demeure bien entendu que la présente invention n'est pas limitée aux exemples de réalisation décrits et/ou représentés ici mais qu'ellle en englobe toutes les variantes entrant dans le cadre de l'invention tel que défini par les revendications

## Revendications

1. Procédé de traitement d'effluents de petites collectivités, c'est-à-dire de 500 à 2 000 eH (équivalent habitant) environ, mettant en oeuvre des filtres plantés de roseaux **caractérisé en ce qu'**il consiste à :
- effectuer un traitement biologique de l'effluent à l'aide d'un lit bactérien et,
- réaliser une élimination des matières en suspension dans l'effluent ainsi traité et, simultanément, un traitement des boues par filtration-compostage sur des filtres plantés de Phragmites australis.

2. Installation pour la mise en oeuvre du procédé selon la revendication 1 **caractérisé en ce qu'**il comporte :
un lit bactérien comportant au moins un étage recevant l'effluent à traiter et,
au moins une cellule de filtration-compostage alimentée à partir du lit bactérien, chacune desdites cellules comportant des couches successives de matériau de remplissage et de sable et leur surface supérieure étant plantée de Phragmites australis.

3. Dispositif selon la revendication 2 **caractérisé en ce que** les dimensions du lit bactérien sont déterminées en fonction des traitements d'élimination de la pollution de l'effluent à effectuer.

4. Dispositif selon la revendication 2 **caractérisé en ce qu'**il comporte au moins trois cellules de filtration-compostage.

5. Dispositif selon l'une quelconque des revendications 2 et 4 **caractérisé en ce que** la surface maximale unitaire de chacune des cellules de filtration est de l'ordre de 100 à 150 m².

6. Dispositif selon l'une quelconque des revendications 2, 4 et 5 **caractérisé en ce que** la surface des cellules de filtration compostage est d'environ 0,4 à 1 m² par eH.

7. Dispositif selon l'une quelconque des revendications 2 à 6 **caractérisé en ce qu'**on prévoit en outre un automate afin d'assurer une alimentation des cellules de filtration-compostage, par permutation circulaire.

8. Dispositif selon l'une quelconque des revendications 2 à 7 **caractérisé en ce qu'**il comporte un moyen de prétraitement des effluents avant leur passage sur le lit bactérien en vue d'éliminer les déchets.

9. Dispositif selon la revendication 8 **caractérisé en ce que** ledit moyen est constitué d'un système de dégrillage ayant une dimension de maille de l'ordre de 3 mm.

10. Dispositif selon la revendication 8 **caractérisé en ce que** ledit moyen est constitué d'un système de tamisage présentant une dimension de maille de l'ordre de 6 mm.

## Claims

1. Process for the treatment of effluents of small communities, i.e. roughly from 500 to 2,000 inh. eq. (inhabitant equivalent), using filters planted with reeds, **characterized in that** it consists of carrying out a biological treatment of the effluent with the aid of a bacterial bed and eliminating suspended matter in the thus treated effluent, accompanied simultaneously by a treatment of the sludge by filtering-composting on filters planted with Phragmites australis.

2. Device for performing the process according to claim 1, **characterized in that** it comprises a bacterial bed having at least one stage receiving the effluent to be treated and at least one filtering-composting cell supplied from the bacterial bed, each of said cells having successive layers of filling material and sand, whilst their upper surface is planted with Phragmites australis.

3. Device according to claim 2, **characterized in that** the dimensions of the bacterial bed are determined as a function of the effluent pollution elimination treatments to be carried out.

4. Device according to claim 2, **characterized in that** it has at least three filtering-composting cells.

5. Device according to either of the claims 2 and 4, **characterized in that** the maximum unit surface of each of the filtering cells is approximately 100 to 150 m².

6. Device according to any one of the claims 2, 4 and 5, **characterized in that** the surface of the filtering-composting cells is approximately 0.4 to 1 m²/inh. eq.

7. Device according to any one of the claims 2 to 6, **characterized in that** a controller is also provided to ensure that the filtering-composting cells are supplied by circular permutation.

8. Device according to any one of the claims 2 to 7, **characterized in that** it incorporates a means for the pretreatment of effluents prior to their passage onto the bacterial bed with a view to the elimination of waste.

9. Device according to claim 8, **characterized in that** said means is constituted by a screening system having a mesh size of approximately 3 mm.

10. Device according to claim 8, **characterized in that** said means is constituted by a classifying system having a mesh size of approximately 6 mm.

## Patentansprüche

1. Verfahren zur Behandlung von Abwässern aus kleineren Gemeinden, d.h. mit etwa 500 bis 2 000 EGW (Einwohnergleichwerten), wobei mit Schilf bepflanzte Filter eingesetzt werden, **dadurch gekennzeichnet, dass** es darin besteht,
- das Abwasser mittels eines Bakterienbetts und
- aus dem so behandelten Abwasser die suspendierten Stoffe zu entfernen und gleichzeitig den Schlamm durch Filtration-Kompostierung über den mit *Phragmites australis* bepflanzten Filtern zu behandeln.

2. Vorrichtung zur Durchführung des Verfahrens nach Anspruch 1, **dadurch gekennzeichnet, dass** sie
- ein Bakterienbett, das mindestens eine Schicht enthält, die das zu behandelnde Abwasser aufnimmt, und
- mindestens eine Filtrations-Kompostierungs-Zelle umfasst, die von dem Bakterienbett versorgt wird, wobei jede dieser Zellen aufeinander folgende Schichten aus Füllmaterial und Sand umfasst und ihre Oberseite mit *Phragmites australis* bepflanzt ist.

3. Vorrichtung nach Anspruch 2, **dadurch gekennzeichnet, dass** die Abmessungen des Bakterienbetts in Abhängigkeit von den durchzuführenden Behandlungen zur Entfernung der Schmutzfracht aus dem Abwasser festgelegt werden.

4. Vorrichtung nach Anspruch 2, **dadurch gekennzeichnet, dass** sie mindestens drei Filtrations-Kompostierungs-Zellen umfasst.

5. Vorrichtung nach Anspruch 2 oder 4, **dadurch gekennzeichnet, dass** die maximale Oberfläche pro Einheit einer Filtrationszelle etwa 100 bis 150 m² beträgt.

6. Vorrichtung nach einem der Ansprüche 2, 4 und 5, **dadurch gekennzeichnet, dass** die Oberfläche der Filtrations-Kompostierungs-Zellen etwa 0,4 bis 1 m² pro EGW beträgt.

7. Vorrichtung nach einem der Ansprüche 2 bis 6, **dadurch gekennzeichnet, dass** außerdem ein Automat vorgesehen wird, um eine Versorgung der Filtrations-Kompostierungs-Zellen durch kreisförmigen Wechsel sicherzustellen.

8. Vorrichtung nach einem der Ansprüche 2 bis 7, **dadurch gekennzeichnet, dass** sie, um Abfälle zu beseitigen, ein Mittel zur Vorbehandlung der Abwässer vor deren Leiten über das Bakterienbett umfasst.

9. Vorrichtung nach Anspruch 8, **dadurch gekennzeichnet, dass** das Mittel aus einem Rechensystem besteht, dessen Öffnungen etwa 3 mm groß sind.

10. Vorrichtung nach Anspruch 8, **dadurch gekennzeichnet, dass** das Mittel aus einem Siebsystem besteht, dessen Öffnungen etwa 6 mm groß sind.
